# EUROPÄISCHE PATENTSCHRIFT

(11) **EP 2 171 004 B1**
(45) Veröffentlichungstag und Bekanntmachung des Hinweises auf die Patenterteilung: **22.05.2019**
(21) Anmeldenummer: 08761349.3
(22) Anmeldetag: 25.06.2008
(51) Int. Cl.: C09D 4/06

(54) **HARZSYSTEM FÜR INTUMESZENT BESCHICHTUNG MIT VERBESSERTER METALLHAFTUNG**
RESIN SYSTEM FOR INTUMESCENT COATING WITH ENHANCED METAL ADHESION
SYSTÈME DE RÉSINE SERVANT À EFFECTUER UN REVÊTEMENT INTUMESCENT PRÉSENTANT UNE ADHÉRENCE AMÉLIORÉE AU MÉTAL

(30) Priorität: 20.07.2007 DE 102007034458
(43) Veröffentlichungstag der Anmeldung: 07.04.2010
(73) Patentinhaber: Evonik Röhm GmbH, 64293 Darmstadt (DE)
(72) Erfinder: SCHMITT, Günter, 64291 Darmstadt (DE); NEUGEBAUER, Peter, 65552 Limburg (DE); SCHOLL, Sybille, 63517 Rodenbach (DE); HEEB, Heike, 63526 Erlensee (DE); REINHARD, Peter, 63303 Dreieich-Dreieichenhain (DE); KÜHL, Gilbert, 63457 Hanau (DE)
(74) Vertreter: Evonik Patent Association
(86) Internationale Anmeldenummer: PCT/EP2008/058047
(87) Internationale Veröffentlichungsnummer: WO 2009/013089

(56) Entgegenhaltungen:
- WO-A-2005/000975
- WO-A-2005/087875
- JP-A- 2 151 669
- US-A- 4 145 477

## Beschreibung

Die Erfindung gemäß Ansprüchen 1 bis 12 betrifft ein Harzsystem für eine intumeszent Beschichtung mit verbesserter Metallhaftung.

Intumeszent Beschichtungen werden zum Schutz von Stahl bzw. Stahlträgern vor Feuerschäden im Bau genutzt Herkömmliche Systeme werden mit verschiedenen Intumeszentzusätzen versehen, die unter Hitzeeinwirkung zusammen reagieren und einen isolierenden Schaum bilden, der eine geringe Wärmeleitung aufweist. Dieser Schaum reduziert die Erhitzung des Stahls, und verlängert somit die Zeit, bevor der Stahl seine Stützfunktion verliert. Zusätzlich Evakuierungszeit wird gewonnen. Bekannte Beschichtungssysteme basieren auf hochmolekularen thermoplastischen Harzen auf Basis von Acrylaten, Methacrylaten und/oder Vinylen und benötigen einen großen Lösemittel- oder Wasseranteil zur Aufbringung auf die entsprechende Metalloberfläche. Das führt zu teilweise sehr langen Trocknungszeiten, insbesondere wenn sehr dicke Schichten aufgetragen werden. Aus Umweltschutzgründen werden vermehrt Beschichtungen auf Wasserbasis verwendet, die jedoch längere Trocknungszeiten beanspruchen, insbesondere in Gebieten mit hoher Luftfeuchtigkeit.

Üblicherweise wird die intumeszent Beschichtung on-site während der Konstruktionsphase aufgetragen. Bevorzugt werden jedoch in-shop Auftragungen, da diese unter kontrollierten Bedingungen erfolgen können. Bei einer langsamen Trocknung ergibt sich aber eine unpraktikable Durchlaufzeit, denn die Bauteile können bis zur vollständigen Trocknung nicht bewegt werden.

Epoxybasierte intumeszent Beschichtungen werden vorzugsweise in der off-shore Industrie verwendet. Sie zeichnen sich durch gute Alterungsbeständigkeit und relativ kurze Trocknungszeiten aus. Polyurethan-Systeme wurden intensiv untersucht. Sie zeichnen sich ebenfalls durch eine relativ kurze Trocknungszeit und eine gute Wasserbeständigkeit aus. Allerdings fielen hier die Feuertests negativ aus, da die Beschichtung keine gute Haftung am Stahl aufweist [Development of alternative technologies for off-site applied intumescent, Longdon, P. J., European Commission, [Report] EUR (2005), EUR 21216, 1-141].

Es bestand die Aufgabe, einen verbesserten Harz für eine intumeszent Beschichtung zur Verfügung zu stellen.

Es bestand zudem die Aufgabe, ein Verfahren zur Harzherstellung zur Verfügung zu stellen.

Die Aufgabe wurde gelöst, durch ein Harz-System für eine intumeszent Beschichtung gemäß Ansprüchen 1 bis 8 umfassend (a) mindestens eine ethylenisch ungesättigte Monomerkomponente; und (b) mindestens eine polymere Komponente mit beta-CEA oder einpolymerisierbaren mehrfach funktionalisierten Carbonsäuren ausgewählt aus der Gruppe Itaconsäure, Fumarsäure, Maleinsäure; und (c) AZO-Initiatoren oder organische Peroxide.

Überraschend wurde gefunden, dass das neue Harz-System als Bindemittel für intumeszent Beschichtungen hervorragende Haftungseigenschaften an metallischen Oberflächen, insbesondere an Stahl aufweist.

Das Harz-System ist auch als Holzbeschichtung verwendbar.

Die erfindungsgemäßen Beschichtungen können sowohl on-site, als auch in-shop eingesetzt werden.

Es wurde gefunden, dass die intumeszent Beschichtungen enthaltend die neuen Harze sehr schnell trocknen/aushärten. Es werden Trocknungszeiten von ca. 1 Stunde erreicht. Durch die Zugabe von mehr Härtern kann die Aushärtungszeit weiter herabgesetzt werden. Somit kann die bevorzugte in-shop Anwendung in akzeptablen Durchlaufzeiten erfolgen.

Außerdem wurde gefunden, dass die schnell trocknenden und gut haftenden Harze für intumeszent Beschichtungen auch für dicke Beschichtungsfilme, beispielsweise 1-5 mm, hervorragend geeignet sind.

Als Vernetzer werden insbesondere mehrfunktionelle Methacrylate wie Allylmethacrylat, Ethylenglykcol-dimethacrylat, Diethylenglykol-dimethacrylat, Triethylenglykol-dimethacrylat, Tetraethylen-glykol-dimethacrylat, Polyethylenglykoldimethacrylat, 1,3-Butandiol-dimethacrylat, 1,4-Butandiol-dimethacrylat, 1,6-Hexandiol-dimethacrylat, 1,12-Dodecandiol-dimethacrylat, Glycerol-dimethacrylat, Trimethylolpropan-trimethacrylat, eingesetzt.

Harzsysteme zur Beschichtung von Metalloberflächen sind bekannt. Intumeszent Beschichtungen sind insbesondere in der WO 2005/000975 beschrieben. Weitere Zusammensetzungen zur Beschichtung sind in JP 02 151669 und WO2005/087875 beschrieben.

Vorzugsweise enthält die Beschichtung ein thermoplastisches Polymerharz kombiniert mit niedermolekularen Monomeren oder Oligomeren mit ethylenisch ungesättigten Doppelbindungen, beispielsweise als alpha-beta ethylenisch ungesättigte Carboxylatestergruppen wie z.B. Methacrylat- oder Acrylatgruppen.

Die Schreibweise (Meth)acrylat bedeutet hier sowohl Methacrylat, wie z.B. Methylmethacrylat, Ethylmethacrylat usw., als auch Acrylat, wie z.B. Methylacrylat, Ethylacrylat usw., sowie Mischungen aus beiden.

Ein thermoplastisches Polymer ist vorzugsweise ein (Meth)acrylatharz, als Homopolymer, Copolymer und/oder Terpolymer. Eine Polymerkomponente ist besonders bevorzugt ein (Meth)acrylatpolymer. Dies kann über die Polymerisation von einem oder mehreren Methacrylat- oder Acrylatmonomeren dargestellt werden, vorzugsweise aus der Gruppe der Methyl(meth)acrylate, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat. Coreagenzien können Styrol oder Vinyltoluole sein. Ein besonders bevorzugte thermoplastische Polymer ist ein Copolymer aus Butylmethacrylat und Methylmethacrylat.

Eine ethylenisch ungesättigte Monomerkomponente enthält mindestens eine Methacrylat- oder Acrylatfunktionalität.

Eine ethylenisch ungesättigte Monomerkomponente ist vorzugsweise ausgewählt aus der Gruppe Methyl(meth)acrylat, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat.

Eine andere Klasse der thermoplastischen Polymerharze beinhaltet Homopolymere, Copolymere oder Terpolymere aus Vinylmonomeren wie beispielsweise Styrol, Vinyltoluol, Vinylchlorid, Vinylacetat, Vinylidenchlorid und/oder Vinylester Coreagenzien könne Diene sein, wie z.B. Butadien.

Die thermoplastischen Harze bilden 10-60 Gew.-% der Harzkomponente der Beschichtungsmischung.

Eine polymere Komponente kann Methyl(meth)acrylat, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat enthalten.

Eine polymere Komponente kann auch ein Reaktionsprodukt aus einem oder mehreren Dienen mit mindestens einem Styrol, Vinyltoluol, Vinylchlorid, Vinylacetat, Vinylidenchlorid und/oder Vinylester enthalten.

Mindestens eine der flüssigen Monomerkomponenten enthält Methacrylatfunktionalitäten, besonders bevorzugt Methacrylsäureester. Gegebenenfalls kann auch eine Acrylatfunktionalität enthalten sein, bevorzugt Acrylsäureester.

Außerdem ist die Monomerkomponente monofunktionell, damit das Reaktionsprodukt mit einem organischen Peroxid thermoplastisch ist und schmilzt und fließt bis zur Reaktionstemperatur der intumeszent Zusatzstoffe.

Beispielsweise werden (Meth)acrylsäureester ausgewählt aus der Gruppe der Methyl(meth)acrylate, Ethyl(meth)acrylate, n-Butyl(meth)acrylate, Isobutyl(meth)acrylate, tert-Butyl(meth)acrylate, 2-Ethylhexyl(meth)acrylate und deren Mischungen. Methylmethacrylat und 2-Ethylhexylacrylat sind besonders bevorzugt.

Die flüssige Monomerkomponente bildet 30-60 Gew.-% der Harzkomponente der Beschichtungsmischung.

Die Harzkomponente bildet 10-60 Gew.-%, besonders bevorzugt 25-50 Gew.-% der Beschichtungsmischung.

Es werden Initiatoren eingesetzt, um die flüssige Beschichtung auszuhärten. Es werden AZO-Initiatoren oder organische Peroxide verwendet. Bevorzugt werden als Initiatoren Dialkylperoxide, Ketoperoxide, Peroxyester, Diacylperoxide, Hydroperoxide und/oder Peroxiketale verwendet. Der Initiator wird in Mengen von 0,5 bis 5%, besonders bevorzugt 1-4% zur gesamten Harzzusammensetzung eingesetzt.

Bei der Verwendung von Dibenzolperoxid als Initiator wird vorzugsweise ein tertiäres Amin zugegeben, um die Aushärtung zu beschleunigen. Bevorzugte tertiäre Amine sind N,N-Dimethylaniline und N,N-Dialkyl-p-toluidine.

Der Anteil der tertiären Amine an der gesamten Harzmischung liegt bei 0,1-4%, bevorzugt bei 0,25-3%.

Bevorzugte Azo-Initiatoren sind 2,2-Azobis(amidinopropan)dihydrochlorid, 2,2-Azobis(2-methylbutyronitril), 2,2-Azobis(2-methylpropannitril), 2,2-Azobis(2,4-dimethylpentanitril) und deren Mischungen.

Eine wesentliche Verbesserung der Haftungseigenschaften der intumeszent Beschichtung auf Metalloberflächen wird durch die Zugabe von β-CEA oder von mehrfach funktionalisiertenCarbonsäuren ausgewählt aus der Gruppe der Itaconsäuren, Fumarsäuren, Maleinsäuren.

Beta-CEA ist das Michael-Produkt der Acrylsäure und ist immer eine Mischung aus:

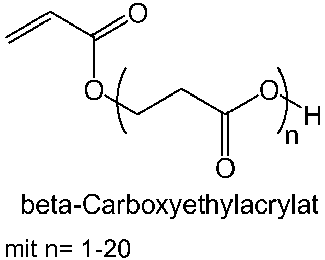

Die einpolymerisierbaren mehrfach funktionalisierten Carbonsäuren sind Bestandteil der polymeren Komponente des Harzes. Diese einpolymerisierbaren mehrfach funktionalisierten Carbonsäuren bewirken zusätzlich eine gute Dispergierwirkung auf die verwendeten intumeszent Bestandteile.

Gelöst wurde die Aufgabe auch durch ein Verfahren gemäß Ansprüchen 9 bis 11 zur Härtung von intumeszent Beschichtungen enthaltend Harz-Systemene gemäß dem Anspruch 1 und durch die Verwendung gemäß der intumeszent Beschichtung nach Anspruch 1, zur Beschichtung von Metalloberflachen und Holzoberflachen.

Die intumeszent Beschichtung enthält spezielle Stoffe, die unter Hitzeeinwirkung miteinander reagieren und eine Schaum zur Isolation bilden. Vorzugsweise besteht sie aus 3 Komponenten, einer Säurequelle, einer Kohlenstoffquelle und einer Gasquelle.

Unter Hitzeeinwirkung beginnt die Harzkomponente zu schmelzen. Bei höheren Temperaturen wird die Säurequelle aktiviert und kann mit den anderen Bestandteilen der Beschichtung reagieren. Als Säurequelle werden beispielsweise Ammoniumpolyphosphate oder Polyphosphorsäuren verwendet die beispielsweise mit Pentaerythritol (Kohlenstoffquelle) zu Polyphosphorsäureester reagieren. Der Abbau dieses Esters führt zu Kohlenstoffverbindungen, die zusammen mit Schäumungsmitteln wie Melamin den gewünschten Schaum bilden.

Die intumeszent Beschichtung enthält idealerweise mindestens eine Säurequelle wie beispielsweise Ammoniumpolyphosphat, Melaminphosphat, Magnesiumsulphat oder Borsäure.

Die intumeszent Beschichtungsmischung enthält eine Kohlenstoffquelle, wie beispielsweise Pentaerythritol und Dipentaerythritol und deren Mischungen. Stärke und expandierbares Graphit sind ebenfalls geeignet.

Die intumeszent Beschichtungsmischung enthält eine Gasquelle, wie beispielsweise Melamin, Melaminphosphat, Melaminborat, Melaminformaldehyd, Melamincyanurat, Tris-(hydroxyethyl)isocyanurat, Ammoniumpolyphosphat oder chloriertes Paraffin. Zusätzlich können Nukleierungsagenzien enthalten sein. Diese können beispielsweise Titandioxid, Zinkoxid, Aluminiumoxid, Silizium, Silikate, Schwermetalloxide wie Ceroxid, Lanthanoxid und Zirkonoxid, Glimmer oder Lehm sein.

Weitere Additive (z.B. Zinkborat, Glaskugeln, Fasermaterialien usw.) können in der intumeszent Beschichtungsmischung enthalten sein.

Der Anteil der intumeszent Bestandteile an der Beschichtungsmischung liegt bei 40-85%, vorzugsweise bei 50-75%.

Thixotrope Additive können zur Verbesserung der Rheologie zugegeben werden, um dicke Beschichtungen in einem Auftragungsschritt zu ermöglichen. Sie werden in Mengen von 0-2%, bevorzugt 0,05-1%, bezogen auf die Gesamtmenge der Beschichtung zugegeben.

Ebenso können Benetzungs- oder Dispersionsadditive zugegeben werden.

Vor der Auftragung der Beschichtung auf die metallische Oberfläche wird das organische Peroxid zugegeben. Damit wird die radikalische Reaktion gestartet, bei der die flüssige Beschichtung aushärtet. Üblicherweise beträgt die Aushärtungszeit 30 Minuten. Dies kann durch die Menge an Initiator und Beschleuniger variiert werden.

Die Beschichtung kann mittels Sprühtechnik, Pinsel, Rolle, Spatel oder Tauchverfahren aufgebracht werden. Alternativ kann auch ein Mehrkomponenten-Sprühsystem verwendet werden.

Die Metalloberfläche wird üblicherweise vor dem Auftragen der Beschichtung gereinigt, um Verarbeitungsrückstände u.ä. zu entfernen. Teilweise werden auch Primer aufgetragen.

Ebenso kann ein Decklack aufgetragen werden, beispielsweise für exponierte Metalloberflächen. Allerdings sollte die Dicke nur zwischen 15 und 250 µm betragen, um die intumeszent Reaktion nicht zu hemmen.

Durch die hervorragenden Haftungseigenschaften kann das erfindungsgemäße Harz-System für inzumeszent Beschichtungen auch auf andere Oberflächen aufgetragen werden, die eine intumeszent Beschichtung benötigen. Beispielsweise können auch Holzoberflächen beschichtet werden.

### Beispiele

### Beispiel 1

Das erfindungsgemäße Harzsystem wird mit einem Graco Extreme Mix Plural Component Spray System verarbeitet. Dieses airless Spray-System verwendet 2 Pumpen, die mit einem Eingangsdruck von 0,35 MPa die Mischung über die Düse mit ca. 19,3 MPa versprüht. Die Düsengröße beträgt ca. 525-675 µm im Durchmesser.

Es werden pro Beschichtungsvorgang üblicherweise 300 µm bis 2000 µm aufgetragen. Bei diesen Versuchen wurden 6 Beschichtungsvorgänge mit jeweils ca. 1000 µm Dicke auf das Substrat aufgebracht. Es wurde Baustahl Swedish standard Sa 2 ½ beschichtet.

### Haftung am Stahl

Mit einem PAT (precision adhesion testequipment, hydraulic adhesion tester) Meßgerät wurde die Haftung der Beschichtung am Baustahl bestimmt.

Es wurde eine Adhesion von durchschnittlich 6,9 MPa gemessen.

Dieser Wert erfüllt die Anforderungen an eine industriell einsetzbare Beschichtung von Baustahl.

### Vergleichsbeispiel

Ein herkömmliches Harzsystem wird mit einem Graco Extreme Mix Plural Component Spray System verarbeitet. Dieses airless Spray-System verwendet 2 Pumpen, die mit einem Eingangsdruck von 0,35 MPa die Mischung über die Düse mit ca. 19,3 MPa versprüht. Die Düsengröße beträgt ca. 525-675 µm im Durchmesser.

Es werden pro Beschichtungsvorgang üblicherweise 300 µm bis 2000 µm aufgetragen. Bei diesen Versuchen wurden 6 Beschichtungsvorgänge mit jeweils ca. 1000 µm Dicke auf das Substrat aufgebracht. Es wurde Baustahl Swedish standard Sa 2 ½ beschichtet.

### Haftung am Stahl

Mit einem PAT (precision adhesion testequipment, hydraulic adhesion tester) Meßgerät wurde die Haftung der Beschichtung am Baustahl bestimmt.

Es wurde eine Adhesion von durchschnittlich 1,38 MPa gemessen.

Dieser Wert erfüllt nicht die Anforderungen an eine industriell einsetzbare Beschichtung von Baustahl.

## Patentansprüche

1. Harz-System für eine Intumeszent Beschichtung umfassend
(a) mindestens eine ethylenisch ungesättigte Monomerkomponente; und
(b) mindestens eine polymere Komponente mit beta-CEA oder einpolymerisierbaren mehrfach funktionalisierten Carbonsäuren ausgewählt aus der Gruppe Itaconsäure, Fumarsäure, Maleinsäure; und
(c) AZO-Initiatoren oder organische Peroxide.

2. Harz-System für eine Intumeszent Beschichtung nach Anspruch 1, wobei eine polymere Komponente ausgewählt ist aus der Gruppe der thermoplastischen Harze.

3. Harz-System für eine Intumeszent Beschichtung nach Anspruch 2, wobei eine polymere Komponente ausgewählt ist aus der Gruppe der Homopolymeren, Copolymeren und/oder Terpolymeren eines (Meth)acrylharzes.

4. Harz-System für eine Intumeszent Beschichtung nach Anspruch 1, wobei eine polymere Komponente ein (Meth)acrylat-Copolymer enthält.

5. Harz-System für eine Intumeszent Beschichtung nach Anspruch 1, wobei eine polymere Komponente ein Methyl(meth)acrylat, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat enthält.

6. Harz-System für eine Intumeszent Beschichtung nach Anspruch 1, wobei eine polymere Komponente ein Reaktionsprodukt aus einem oder mehreren Dienen mit mindestens einem Styrol, Vinyltoluol, Vinylchlorid, Vinylacetat, Vinylidenchlorid und/oder Vinylester enthält.

7. Harz-System für eine Intumeszent Beschichtung nach Anspruch 1, wobei eine ethylenisch ungesättigte Monomerkomponente eine Methycrylat- oder Acrylatfunktionalität enthält.

8. Harz-System für eine Intumeszent Beschichtung nach Anspruch 7, wobei eine ethylenisch ungesättigte Monomerkomponente Methyl(meth)acrylat, Ethyl(meth)acrylat, n-Butyl(meth)acrylat, Isobutyl(meth)acrylat, t-Butyl(meth)acrylat, 2-Hydroxyethyl(meth)acrylat, 2-Hydroxypropyl(meth)acrylat und/oder 2-Ethylhexyl(meth)acrylat enthält.

9. Verfahren zur Härtung einer intumeszent Beschichtung enthaltend ein Harz-System nach Anspruch 1, wobei mindestens eine ethylenisch ungesättigte Monomerkomponente und mindestens eine polymere Komponenten mit beta-CEA oder einpolymerisierbaren mehrfach funktionalisierten Carbonsäuren, ausgewählt aus der Gruppe Itaconsäure, Fumarsäure, Maleinsäure, und die üblichen AZO-Initiatoren oder organische Peroxide als Intumeszent Hilfs- und Zusatzstoffe mittels freier radikalischer Polymerisation polymerisiert werden.

10. Verfahren zur Härtung einer intumeszent Beschichtung nach Anspruch 9, wobei als Hilfs- und Zusatzstoffe organische Peroxide, verwendet werden.

11. Verfahren zur Härtung einer intumeszent Beschichtung nach Anspruch 10, wobei als Initiatoren Dialkylperoxide, Ketoperoxide, Peroxyester, Diacylperoxide, Hydroperoxide und/oder Peroxiketale verwendet werden.

12. Verwendung der intumeszent Beschichtung nach Anspruch 1, zur Beschichtung von Metalloberflächen und Holzoberflächen.

## Claims

1. Resin system for an intumescent coating comprising
(a) at least one ethylenically unsaturated monomer component; and
(b) at least one polymeric component comprising beta-CEA or copolymerizable polyfunctionalized carboxylic acids selected from the group of itaconic acid, fumaric acid and maleic acid, and
(c) azo initiators or organic peroxides.

2. Resin system for an intumescent coating according to Claim 1, wherein one polymeric component is selected from the group of thermoplastic resins.

3. Resin system for an intumescent coating according to Claim 2, wherein one polymeric component is selected from the group of homopolymers, copolymers and/or terpolymers of a (meth)acrylic resin.

4. Resin system for an intumescent coating according to Claim 1, wherein one polymeric component comprises a (meth)acrylate copolymer.

5. Resin system for an intumescent coating according to Claim 1, wherein one polymeric component comprises one methyl (meth)acrylate, ethyl (meth)acrylate, n-butyl (meth)acrylate, isobutyl (meth)acrylate, tert-butyl (meth)acrylate, 2-hydroxyethyl (meth)acrylate, 2-hydroxypropyl (meth)acrylate and/or 2-ethylhexyl (meth)acrylate.

6. Resin system for an intumescent coating according to Claim 1, wherein one polymeric component comprises a reaction product of one or more dienes with at least one of styrene, vinyltoluene, vinyl chloride, vinyl acetate, vinylidene chloride and/or vinyl ester.

7. Resin system for an intumescent coating according to Claim 1, wherein one ethylenically unsaturated monomer component comprises one methacrylate or acrylate functionality.

8. Resin system for an intumescent coating according to Claim 7, wherein one ethylenically unsaturated monomer component comprises methyl (meth)acrylate, ethyl (meth)acrylate, n-butyl (meth)acrylate, isobutyl (meth)acrylate, tert-butyl (meth)acrylate, 2 hydroxyethyl (meth)acrylate, 2-hydroxypropyl (meth)acrylate and/or 2-ethylhexyl (meth)acrylate.

9. Process for curing an intumescent coating comprising a resin system according to Claim 1, wherein at least one ethylenically unsaturated monomer component and at least one polymeric component comprising beta-CEA or copolymerizable, polyfunctionalized carboxylic acids, selected from the group of itaconic acid, fumaric acid and maleic acid, and the typical azo initiators or organic peroxides as intumescent auxiliaries and additives are polymerized by means of free radical polymerization.

10. Process for curing an intumescent coating according to Claim 9, wherein auxiliaries and additives used are organic peroxides.

11. Process for curing an intumescent coating according to Claim 10, wherein initiators used are dialkyl peroxides, keto peroxides, peroxy esters, diacyl peroxides, hydroperoxides and/or peroxy ketals.

12. Use of the intumescent coating according to Claim 1 for coating metal surfaces and wood surfaces.

## Revendications

1. Système de résine pour un revêtement intumescent, comprenant :
(a) au moins un composant monomère éthyléniquement insaturé ; et
(b) au moins un composant polymère comprenant du bêta-CEA ou des acides carboxyliques polyfonctionnalisés copolymérisables choisis dans le groupe constitué par l'acide itaconique, l'acide fumarique, l'acide maléique ; et
(c) des initiateurs AZO ou des peroxydes organiques.

2. Système de résine pour un revêtement intumescent selon la revendication 1, dans lequel un composant polymère est choisi dans le groupe des résines thermoplastiques.

3. Système de résine pour un revêtement intumescent selon la revendication 2, dans lequel un composant polymère est choisi dans le groupe des homopolymères, copolymères et/ou terpolymères d'une résine (méth) acrylique.

4. Système de résine pour un revêtement intumescent selon la revendication 1, dans lequel un composant polymère contient un copolymère de (méth)acrylate.

5. Système de résine pour un revêtement intumescent selon la revendication 1, dans lequel un composant polymère contient un (méth)acrylate de méthyle, (méth)acrylate d'éthyle, (méth)acrylate de n-butyle, (méth)acrylate d'isobutyle, (méth)acrylate de t-butyle, (méth)acrylate de 2-hydroxyéthyle, (méth)acrylate de 2-hydroxypropyle et/ou (méth)acrylate de 2-éthylhexyle.

6. Système de résine pour un revêtement intumescent selon la revendication 1, dans lequel un composant polymère contient un produit de réaction d'un ou de plusieurs diènes avec au moins un styrène, vinyltoluène, chlorure de vinyle, acétate de vinyle, chlorure de vinylidène et/ou ester de vinyle.

7. Système de résine pour un revêtement intumescent selon la revendication 1, dans lequel un composant monomère éthyléniquement insaturé contient une fonctionnalité méthacrylate ou acrylate.

8. Système de résine pour un revêtement intumescent selon la revendication 7, dans lequel un composant monomère éthyléniquement insaturé contient un (méth)acrylate de méthyle, (méth)acrylate d'éthyle, (méth)acrylate de n-butyle, (méth)acrylate d'isobutyle, (méth)acrylate de t-butyle, (méth)acrylate de 2-hydroxyéthyle, (méth)acrylate de 2-hydroxypropyle et/ou (méth)acrylate de 2-éthylhexyle.

9. Procédé de durcissement d'un revêtement intumescent contenant un système de résine selon la revendication 1, selon lequel au moins un composant monomère éthyléniquement insaturé et au moins un composant polymère contenant du bêta-CEA ou des acides carboxyliques polyfonctionnalisés copolymérisables choisis dans le groupe constitué par l'acide itaconique, l'acide fumarique, l'acide maléique, et les initiateurs AZO ou peroxydes organiques usuels en tant qu'adjuvants et additifs intumescents sont polymérisés par polymérisation radicalaire libre.

10. Procédé de durcissement d'un revêtement intumescent selon la revendication 9, selon lequel des peroxydes organiques sont utilisés en tant qu'adjuvants et additifs.

11. Procédé de durcissement d'un revêtement intumescent selon la revendication 10, selon lequel des peroxydes de dialkyle, des cétoperoxydes, des peroxyesters, des peroxydes de diacyle, des hydroperoxydes et/ou des peroxycétals sont utilisés en tant qu'initiateurs.

12. Utilisation du revêtement intumescent selon la revendication 1 pour le revêtement de surfaces métalliques et de surfaces en bois.
